# EUROPEAN PATENT APPLICATION

(11) **EP 2 135 520 A2**
(43) Date of publication of application: **23.12.2009**
(21) Application number: 09162978.2
(22) Date of filing: 17.06.2009
(51) Int. Cl.: A45C 5/14, A45C 13/38

(54) **Bag on casters**

(30) Priority: 18.06.2008 JP 2008159798
(71) Applicant: Swany Corporation, Higashikagawa-shi, Kagawa (JP)
(72) Inventor: Miyoshi, Etsuo, Higashikagawa-shi, Kagawa (JP)
(74) Representative: Intes, Didier Gérard André

(57) **Abstract**

A bag is wheeled in an upright orientation on casters (1) on its bottom of by using a grip. A shaft (9) is coupled to a wheel (6) by one bearing (8). The ends of the shaft (9) are secured to the yoke (7) coupled to the bag portion (3). An outer ring (8B) of the bearing (8) is fitted in a fit-in groove (15) arranged at the center of the wheel (6). The outer diameter (A) of the shaft (9) is smaller than the inner diameter (B) of an inner ring (8A), and spacer pipes (17) are inserted into the inner ring (8A). Insertion portions (17B) of the spacer pipes (17) with a smaller outer diameter are attached to the inner ring (8A). Stopper portions (17A) with a greater outer diameter are arranged between the inner ring (8A) and the yoke (7) to hold the bearing (8).

## Description

### 1. Field of the Invention

The present invention relates to a bag that includes casters on its bottom, and in particular to a bag that can be wheeled so as to be borne in an upright orientation on casters.

### 2. Description of the Related Art

In the case where a caster is configured to have a wheel coupled to a shaft by bearings, its rotational resistance can be small, and noise in rotation can be also small. In this configuration, generally, bearings are secured on the both sides of the wheel. Accordingly, the thus-configured caster requires two bearings. This increases the cost of parts. In order to solve this disadvantage, a caster has been developed that is configured to have a wheel coupled to a shaft by one bearing (See Japanese Utility Model Publication No. JP-U-2606793).

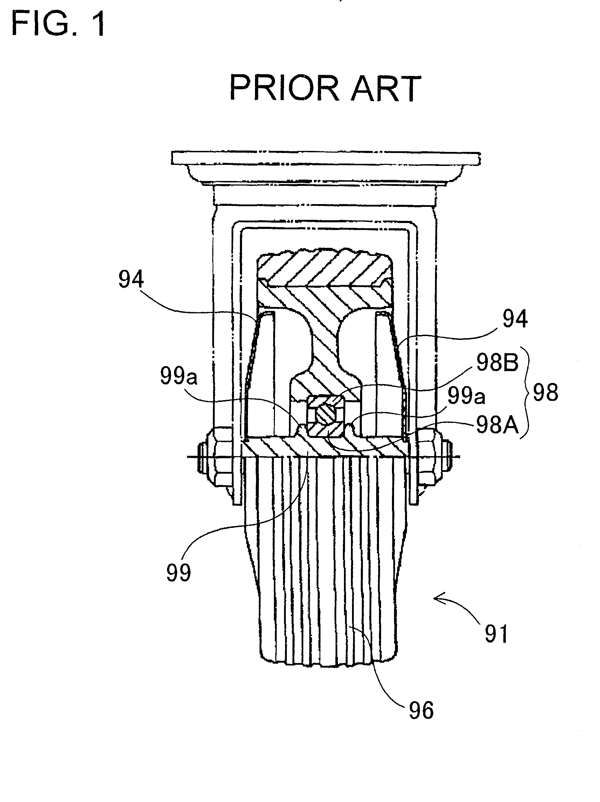

Fig. 1 shows the caster in Japanese Utility Model Publication No. JP-U-2606793. In the caster 91, an outer ring 98B of a bearing 98 is secured to the center of a wheel 96. To secure an inner ring 98A of the bearing 98 at a predetermined position of a shaft 99, flange portions 99a are formed on the shaft 99 to be arranged on the both sides of the inner ring 98A. This configuration has a disadvantage in that time and effort are required to form the flange portion on the shaft 99. In particular, since, after the bearing 98 is attached onto the shaft 99, the flange portions 99a are formed, in addition to the disadvantage in that time and effort are required to form the flange portions 99a, the configuration has a disadvantage in that this formation process may give a shock to the bearing 98, which may in turn cause damage to the bearing 98. The configuration also has a disadvantage in that the diameter of the shaft 99 is required large so that the weight of the caster 91 becomes heavy. The reason is that the shaft 99 is required to have an outer diameter equal to the inner diameter of the inner ring 98A of the bearing 98. As a result, the diameter of the shaft 99 becomes large. In the configuration, foreign bodies such as debris get into the bearing 98 through the space between the inner ring 98A and the outer ring 98B of the bearing 98. For this reason, the configuration also has a disadvantage in that, in the case where the caster is used for a bag used outdoors, the durability of the bearing may considerably decrease. Although such a disadvantage can be prevented by wheel covers 94 that are arranged as shown in Fig. 1, the configuration of the caster 91 will be more complicated if having the wheel covers 94. Accordingly, there are disadvantages in that its manufacturing cost becomes high, and the wheel covers 94 make the caster 91 heavy.

The present invention has been developed for solving the aforementioned disadvantages in conventional casters. It is an important object of the present invention to provide a bag on casters that can be simply and easily mass-produced at low cost, and can be smoothly wheeled with low noise while having light but durable casters.

### SUMMARY OF THE INVENTION

A bag on casters according to the present invention includes a bag portion with casters arranged on the bottom of the bag portion, and a grip that is coupled to the bag portion. The bag can be wheeled in an upright orientation on the casters by using the grip. Each of the casters includes a wheel, a shaft that is coupled to the wheel by one bearing, and a yoke that holds the ends of the shaft and is coupled to the bag portion. A fit-in groove is arranged at the center of the wheel to accommodate an outer ring of the bearing. The outer ring of the bearing is fitted in the fit-in groove to hold the bearing. The outer diameter of the shaft is configured smaller than the inner diameter of an inner ring of the bearing to reduce the diameter and the weight of the shaft. A pair of spacer pipes are inserted into the inner ring from the sides of the inner ring to be arranged on the shaft. The spacer pipes are a cylindrical member that is formed of a material with hardness lower than the shaft. The cylindrical member includes an insertion portion with a smaller outer diameter, and a stopper portion with an outer diameter greater than the insertion portion. The insertion portions of the pair of spacer pipes are inserted into the inner ring of the bearing from the sides of the inner ring to hold the inner ring to the shaft. The stopper portions are arranged between the inner ring and the yoke to arrange the spacer pipes at predetermined positions of the shaft. The bearing is held at a predetermined position of the shaft by the pair of spacer pipes.

The aforementioned bag on casters has features in that the bag can be simply and easily mass-produced at low cost, and can be smoothly wheeled with low noise. In addition, the aforementioned bag on casters has features in that a shaft of the bag can have a small diameter to reduce the weight of the caster but can be durable.

The above and further objects of the present invention as well as the features thereof will become more apparent from the following detailed description to be made in conjunction with the accompanying drawings.

### BRIEF DESCRIPTION OF THE DRAWINGS

Fig. 1 is a view showing a known caster of the prior art with partially shown in a cross-sectional view;
Fig. 2 is a perspective view of a bag on casters according to one embodiment of the present invention;
Fig. 3 is a perspective view of a bag on casters according to another embodiment of the present invention;
Fig. 4 is a perspective view of a bag on casters according to still another embodiment of the present invention;
Fig. 5 is a view showing a caster according to the present invention with partially shown in a cross-sectional view; and
Fig. 6 is a cross-sectional view of the caster taken along a line A-A shown in Fig. 5.

### DETAILED DESCRIPTION OF THE EMBODIMENT(S)

In a bag on casters according to one aspect, an insertion portion 17B of each of spacer pipes 17 can be tapered down toward its end.
According to this caster, the insertion portion of the spacer pipe can be press-fitted between an inner ring and a shaft to be inserted between the inner ring and the shaft without a gap. Accordingly, a bearing can be firmly and reliably held to the shaft without inclination. In other words, the insertion portion of the spacer pipe can be smoothly press-fitted that can reliably hold the inner ring to the shaft.

Also, in a bag on casters according to another aspect, the total length of the insertion portions 17B of a pair of the spacer pipes 17 inserted on the sides of the wheel 6 can be shorter than the width of an inner ring 8A of a bearing 8 so that a gap 19 is created on the inner side of the inner ring 8A when the insertion portions 17B of the pair of spacer pipes 17 are inserted into the inner ring 8A.
According to this caster, the insertion portions can be entirely inserted into the inner ring to firmly hold the bearing to the shaft by the spacer pipes. In particular, in this configuration, when the insertion portions that are tapered down toward their ends are deeply inserted into the inner ring, the insertion portions can very firmly hold the inner ring to the shaft.

Also, in a bag on casters according to another aspect, the center hole of an inner ring 8A of a bearing the can have a tapered surface the outer diameter of which increases toward the opening ends of the center hole on the both sides.
According to this caster, the insertion portion of the spacer pipe can be smoothly press-fitted between an inner ring and a shaft to be inserted between the inner ring and the shaft without a gap. Accordingly, a bearing can be firmly and surely held to the shaft without inclination. In other words, the insertion portion of the spacer pipe that can reliably hold the inner ring to the shaft can be guided to and press-fitted into the inner ring.

Also, in a bag on casters according to another aspect, a shaft 9 can be formed of steel or a steel alloy, and the spacer pipes 17 can be formed of any of hard plastic, brass, lead and a lead alloy.
According to this caster, when formed of hard plastic, the spacer pipes can be light. When formed of a metal material such as brass and lead with hardness lower than the shaft, the spacer pipes can be smoothly press-fitted between an inner ring of a bearing and the shaft to firmly hold the bearing to the shaft.

Also, in a bag on casters according to another aspect, the depth of a fit-in groove 15 of the wheel 6 can be deeper than the thickness of the outer ring 8B of the bearing 8.
According to this caster, peripheral walls that protrude on the sides of the fit-in groove can cover opening parts between the inner and outer rings to prevent foreign bodies from getting into the space between the inner and outer rings.

Also, in a bag on casters according to another aspect, the difference between the outer diameters of a stopper portion 17A and the insertion portion 17B of the spacer pipe 17 can be greater than the thickness of the inner ring 8A of the bearing 8.
According to this caster, the stopper portion can cover the opening parts between the inner and outer rings to prevent foreign bodies from getting into the space between the inner and outer rings. In particular, in the case where the opening parts between the inner and outer rings is covered by the peripheral walls on the sides of the fit-in groove formed on the wheel and the stopper potions arranged in the spacer pipes, it is possible to more reliably prevent foreign bodies from getting into the space between the inner and outer rings. As a result, the life of the bearing can be remarkably improved.

Also, in a bag on casters according to another aspect, the wheel 6 can have peripheral walls 16 on the both sides of the fit-in groove 15, and the peripheral walls can be arranged in proximity to but not in contact with the outer peripheries of the stopper portions 17A of the spacer pipes 17.
According to this caster, since the peripheral wall 16 can come in contact with the stopper portion of the spacer pipe to prevent inclination of the wheel, it is possible to prevent damage to the bearing if a large inclination force is applied to the wheel. In addition, since the peripheral walls and the stopper portions more tightly cover the opening parts between the inner and outer rings, it is possible to more reliably prevent foreign bodies such as debris from getting into the space between the inner and outer rings.

Also, in a bag on casters according to still another aspect, the wheel 6 can have peripheral walls 16 on the both sides of the fit-in groove 15, the peripheral walls 16 being arranged in proximity to but not in contact with the outer peripheries of the stopper portions 17A of the spacer pipes 17, and the gap 18 between the inner peripheral surface of the peripheral wall 16 and the outer peripheral surface of the stopper portion 17A can be 0.1 to 1 mm.

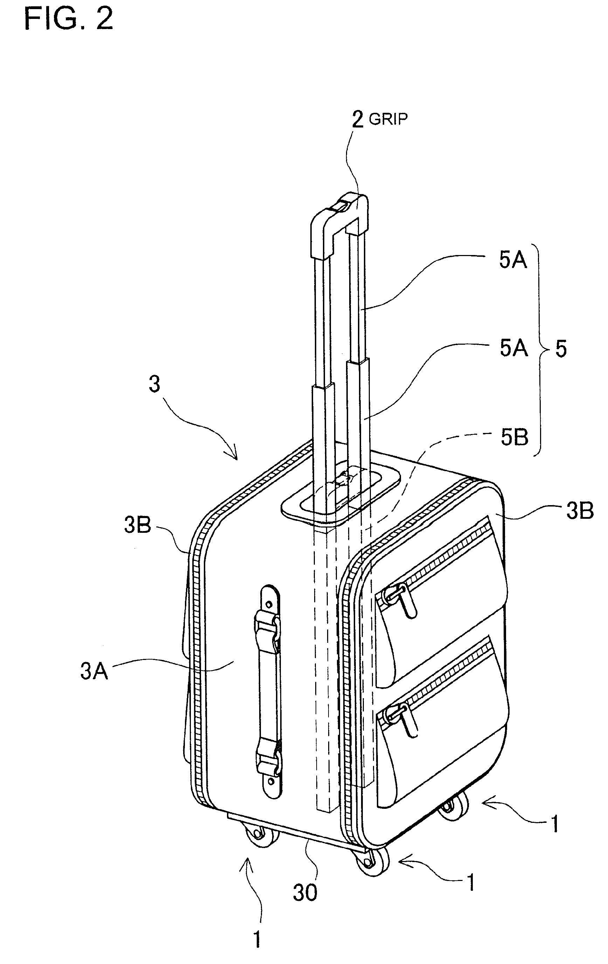

The following description will describe a bag on casters with reference to the drawings. The bag shown in Figs. 2 through 4 includes a bag portion 3 and a grip 2. Casters 1 are arranged at four corners of the bottom of the bag portion 3, and allow the bag to be wheeled in all directions. The grip 2 can be moved upward of the bag portion 3. Users can wheel the bag in all direction by pushing or pulling the grip 2 so that the bag portion 3 is borne in an upright orientation by the casters 1 at the four corners.

The bag portion 3 includes a main section 3A and a cover section(s) 3B. The cover section 3B is coupled to the main section 3A to open/close the main section 3A. The bag portion 3 that includes the main section 3A and the cover section 3B can be formed of a sufficiently hard material such as hard plastic (e.g., ABS). The bag portion 3 can be also formed of fabric with a binder that is cured in the fabric. The bag portion 3 can be also formed of waterproof hard paper with coating that is applied on the surface of the paper. The bag portion 3 can be also formed of metal such as aluminum or a soft material such as a flexible sheet. In the case where the bag portion 3 is formed of a flexible sheet, a reinforcement frame member can be arranged inside the bag portion to keep a bag shape.

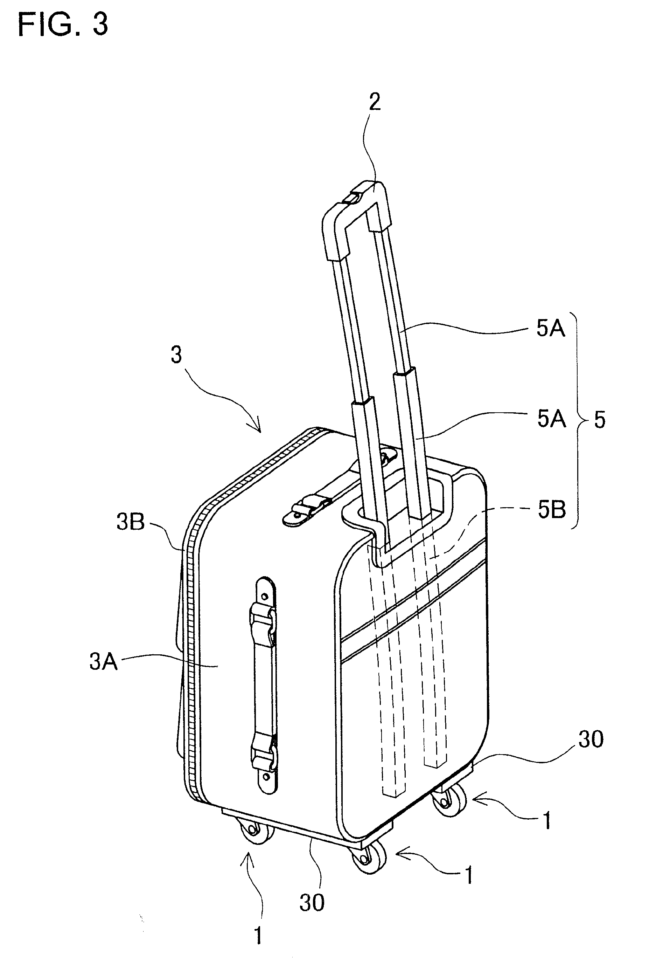

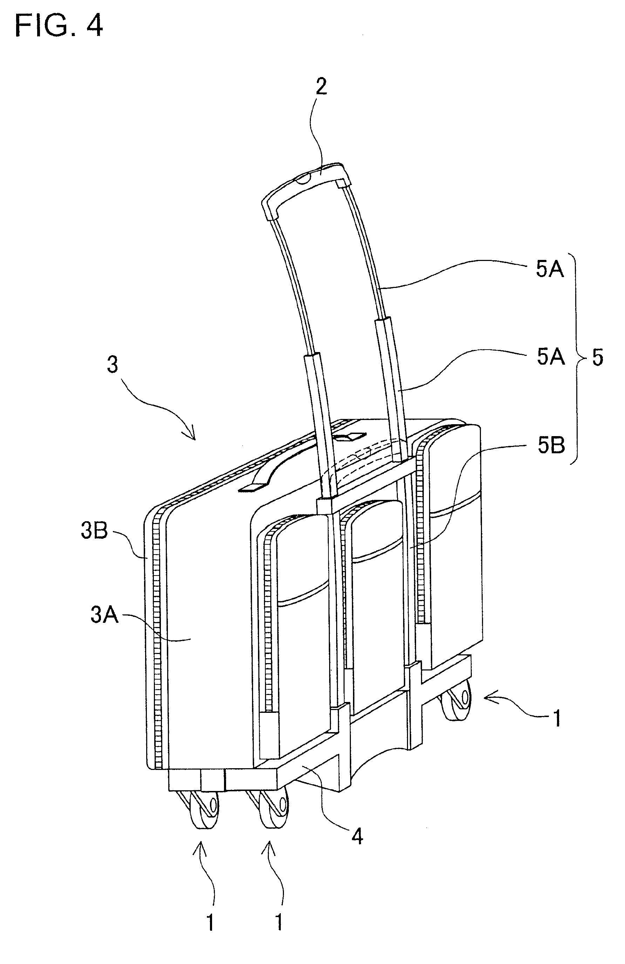

The bag portion 3 can include the cover sections 3B that open/close the main section on the both sides as shown in Fig. 2, or the cover section 3B that opens/closes the main section 3A on one side as shown in Fig. 3. Also, as shown in Fig. 4, the bag portion 3 can be configured to be removable from a base 4 that includes the casters 1.

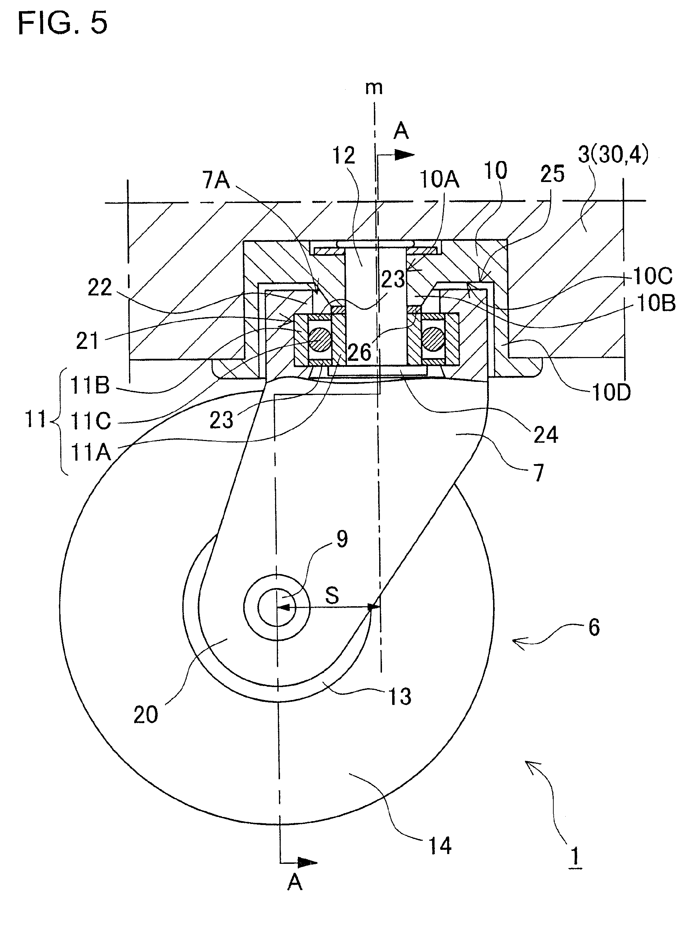

The grip 2 can be drawn out from the bag, when the bag is wheeled by using the casters 1. The grip 2 can be retracted into the bag except when the bag is wheeled by using the casters 1. The grip 2 is coupled to the bag portion 3 to be moved upward/downward by telescopic rods 5. The grip 2 can be located at the center of the upper surface of the bag portion 3 as shown in Fig. 2. As shown in Figs. 3 and 4, the grip 2 can be also located on one side of (right side in Figures) of the bag portion 3. In this case, the grip 2 is moved toward the center from the one side as the grip is lifted and moved upward. In the case where the telescopic rods 5 are located on one side of the bag portion 3, the center of the bag portion 3 refers to the center in the left-and-right direction. In the case of bags shown in Figs. 3 and 5, the telescopic rods 5 are located on one side (right side in Figures) of the bag portion 3. The telescopic rods 5 are curved so that the grip 2 is moved toward the center from the one side of the bag portion 3 when the telescopic rods 5 are elongated. In other words, the telescopic rods 5 are curved so that the middle parts of the telescopic rods 5 bulge outward to move the grip 2 from the side toward the center of the bag portion 3 as the grip is moved upward. Although not illustrated, the telescopic rods may not be curved but be inclined and located on one side of the bag portion so that the grip moves from the one side toward the center of the bag portion. It should be appreciated that the grip is not always required to be located at the center of the bag portion 3 when the telescopic rods 5 are elongated. The reason is that the bag can be wheeled straight forward by pushing the grip 2 even in the case where the grip 2 is not completely located at the center. In Figures, in the case where a zero point is defined as one end surface where the telescopic rods 5 are located, and the opposite side is defined as 100, for example, when moved upward, the grip 2 is located at a position of 15% to 80%, preferably 20% to 60%, and more preferably 20% to 50 %.

A stopper (not shown) holds the telescopic rods 5 so that the grip 2 is located on the top of or above the bag portion 3 when the telescopic rods 5 are collapsed, in other words, when the grip 2 is fully lowered. The telescopic rods 5 are designed so that the height of upper surface of the grip 2 from the bottom of the casters 1 is approximately 50 cm when the telescopic rods 5 are fully retracted to fully lower the grip 2. It should be appreciated that the telescopic rods can be designed so that the height of upper surface of the grip 2 from the bottom of the casters 1 is preferably 30 to 80 cm, more preferably 35 to 75 cm when the telescopic rods are retracted to fully lower the grip. For ease of gripping the grip 2, the bag portion 3 is designed to be lower than the grip 2 when the telescopic rods 5 are retracted to fully lower the grip 2. The stopper holds the telescopic rods 5 so that the height of center of the grip 2 from the bottom of the casters 1 is 60 to 100 cm, preferably 65 to 85 cm, when the telescopic rods are elongated, in other words, when the grip 2 is fully raised.

Each of the telescopic rods 5 includes a guide tube 5B, and sliding rods 5A. The guide tube 5A extends in the vertical direction. The sliding rods 5A are telescopically inserted in the guide tube 5B. The grip 2 is secured on the top of the sliding rods 5A. The guide tubes 5B are secured in the center of the bag portion 3 in the bag shown in Fig. 2, on one side of the bag portion 3 in the bag shown in Fig. 3, and on an edge of the base 4 on one side of the bag portion 3 in the bag shown in Fig. 4. The guide tube 5B and the sliding rods 5A can be metal tubes with different sizes from each other. However, the guide tube and the sliding rods may be square tubes formed of plastic.

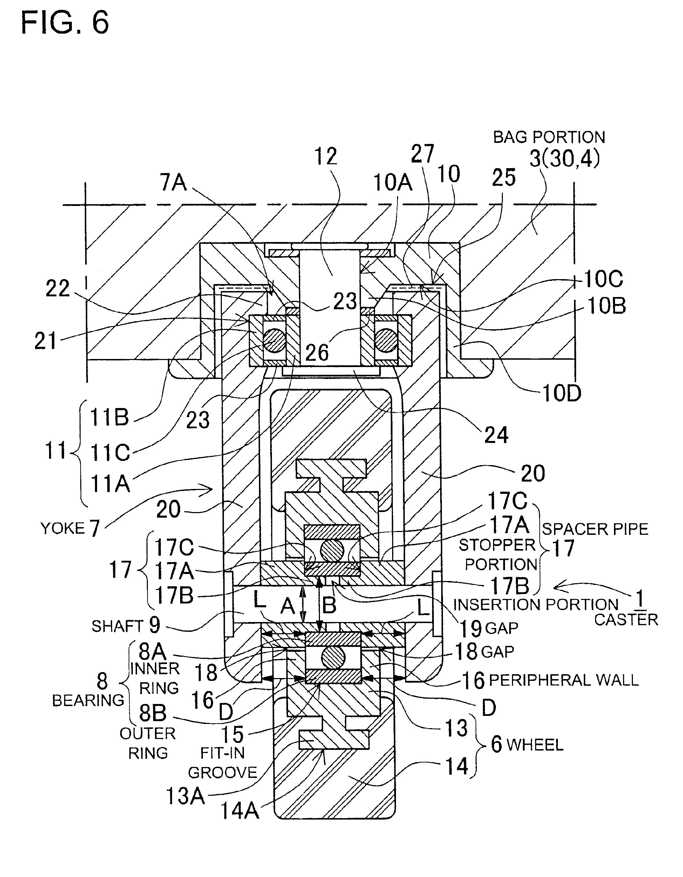

Figs. 5 and 6 show cross-sectional views of the caster 1. The illustrated casters 1 includes a wheel 6, a shaft 9 that is coupled to the wheel 6 by one bearing 8, and a yoke 7 that holds the ends of the shaft 9. The yoke 7 is coupled to the bag portion 3. In order that the illustrated caster 1 may be free to swivel in the horizontal plane, the yoke 7 is coupled to the bag portion 3 to swivel. The yoke 7 of the caster 1 is coupled to a vertical shaft 12 by a horizontal bearing 11. The upper end of the vertical shaft 12 is coupled to a holding portion 10. The yoke 7 of the caster 1 is coupled to an outer ring 11B of the horizontal bearing 11. The inner ring 11A of the horizontal bearing 11 is coupled to the vertical shaft 12. The holding portion 10 that holds the upper part of the vertical shaft 12 is secured to the bottom surface of the bag portion 3. Thus, the caster 1 is free to swivel in the horizontal plane. It should be appreciated that, in the bag according to the present invention, the casters are not necessarily free to swivel but yoke may be attached not to swivel.

A tire portion 14 is secured around the outer periphery of a wheel portion 13 of the wheel 6 shown in Fig. 6, and is formed of soft plastic (e.g., soft urethane) or a rubber-type elastic member (e.g., natural rubber). The illustrated wheel 6 has an undercut protruding section 13A that extends along the outer periphery of the wheel portion 13. The tire portion 14 has a coupling groove 14A that extends along its inner periphery. The protruding section 13A of the wheel portion 13 is fitted in the coupling groove 14A. In the wheel 6, the tire portion 14 can be firmly coupled to the wheel portion 13 by fitting the protruding section 13A into the coupling groove 14A. To produce this wheel 6, after the wheel portion 13 and the tire portion 14 are separately formed, the tire portion 14 of the rubber-type elastic member is deformed and then coupled to the wheel portion 13. Also, the tire portion 14 can be secured to the wheel portion 13 by insert molding in a process where the wheel portion 13 is formed. Also, the wheel portion 13 can be secured to the tire portion 14 by insert molding in the process where the tire portion 14 is formed. Although, in the illustrated wheel 6, the protruding section 13A is fitted in the coupling groove 14A to couple the tire portion 14 to the wheel portion 13, the tire portion may be attached to the wheel portion by an adhesive. Although the wheel portion 13 is formed of hard plastic by molding, the wheel portion may be formed of metal such as aluminum. The outer diameter of the wheel 6 is preferably 45 mm. The outer diameter of the wheel can be 40 to 75 mm, for example.

In order to smoothly rotate with low noise, the wheel 6 is coupled to the shaft 9 by the bearing 8. The ends of the shaft 9 are secured to the yoke 7. In order that the bearing 8 may be held to the wheel 6, a fit-in groove 15 is arranged at the center of the wheel 6 to accommodate an outer ring 8B of the bearing 8. The outer ring 8B of the bearing 8 is fitted in the fit-in groove 15 of the wheel 6 to hold the bearing 8. In the wheel 6 shown in Fig. 6, the outer ring 8B of the bearing 8 is secured to the fit-in groove 15 by insert molding in the process where the wheel portion 13 is formed of the plastic by molding. In the wheel 6 that accommodates the outer ring 8B in the fit-in groove 15, the peripheral walls 16 are arranged on the both sides of the fit-in groove 15. In other words, the fit-in groove 15 is arranged between a pair of the opposed peripheral walls 16 so that the outer ring 8B of the bearing 8 is fitted in the fit-in groove 15. In order that the outer ring 8B of the bearing 8 may be fitted in and secured to the fit-in groove 15, the inner width of the fit-in groove 15 is equal to the outer width the outer ring 8B to firmly and non-movably secure the outer ring 8B. In the case where the outer ring 8B of the bearing 8 is secured to the wheel portion 13 formed of plastic in the process where the wheel portion 13 is formed by molding, the outer ring 8B can be firmly secured to the fit-in groove 15.

The depth of the fit-in groove 15 is deeper than the thickness of the outer ring 8B of the bearing 8. In other words, the protruding height of the disc-shaped the peripheral walls 16 toward their center is greater than the thickness of the outer ring 8B. The peripheral walls 16 of the wheel portion 13 shown in Fig. 6 have a height that brings the peripheral walls 16 in proximity to but not in contact with the outer peripheries of stopper portions 17A of later-described spacer pipes 17. That is, the height of the peripheral walls 16 is dimensioned so that gaps 18 between the inner peripheral surfaces of the peripheral walls 16 and the outer peripheral surfaces of the stopper portions 17A is 0.1 to 1 mm. The height of the peripheral walls 16 is dimensioned so that the gaps 18 between the peripheral walls 16 and the stopper portions 17A are located in a range of the opening parts between the inner and outer rings 8A and 8B.

The gaps 18 between the peripheral walls 16 and the stopper portions 17A prevents inclination of the wheel 6 by contact of the peripheral wall 16 with the stopper portion 17A when an inclination force is applied to the wheel 6 and inclines the wheel 6 relative to the shaft 9. For this reason, the gap 18 is optimized based on the hardness of the spacer pipe 17. If the spacer pipe is formed of a flexible material, the wheel is easily inclined. Accordingly, the gap between the peripheral wall and the stopper portion is designed large. Contrary to this, if the spacer pipe is formed of a hard material, the inclination of the wheel will be small. Accordingly, the gap between the peripheral wall and the stopper portion is designed small. For this reason, in the case where the caster 1 includes the spacer pipe 17 formed of hard plastic, and the gap (18) between the peripheral wall 16 and the stopper portion 17A is designed 0.5 to 0.7 mm.

The outer diameter (A) of the shaft 9 is smaller than the inner diameter (B) of the inner ring 8A of the bearing 8, and a pair of the spacer pipes 17 are inserted into the inner ring 8A from the sides of the inner ring 8A to be arranged on the shaft 9. A hard cylindrical metal rod such as steel and a steel alloy is used as the shaft 9 to prevent deformation caused by a load applied to the wheel 6. The shaft 9 passes through the yoke 7 and is held to the yoke 7 by forming protruding rim parts on the ends of the shaft 9. It should be appreciated that, although not illustrated, the shaft can have a protruding rim on one end and a male-threaded part on the other ends, and the shaft can be held to the yoke by screwing a nut onto the male-threaded part.

The spacer pipes 17 are a cylindrical member that is formed of a material with hardness lower than the shaft 9. The cylindrical member includes an insertion portion 17B with a smaller outer diameter, and the stopper portion 17A with an outer diameter greater than the insertion portion 17B. The insertion portions 17B of the pair of spacer pipes 17 are inserted into the inner ring 8A of the bearing 8 from the sides of the inner ring 8A to hold the inner ring 8A to the shaft 9. The spacer pipes 17 are formed of hard plastic by molding. It should be appreciated that the spacer pipes may be formed of metal such as brass, lead and a lead alloy that is more deformable and has hardness lower than the shaft.

The insertion portions 17B of the spacer pipes 17 are press-fitted between the inner ring 8A of the bearing 8 and the shaft 9 to hold the bearing 8 to the shaft 9. In order that the spacer pipes 17 may firmly hold the inner ring 8A to the shaft 9, the thickness of the insertion portion 17B is dimensioned equal to or slightly larger (e.g., 0.01 to 0.5 mm larger) than the gap 18 between the shaft 9 and the outer ring 8B. The thickness of the insertion portion 17B is dimensioned so that the insertion portion 17B can be press-fitted in the gap 19 between the inner ring 8A and the shaft 9, and can hold the inner ring 8A to the shaft 9 after press-fitted. For this reason, the thickness of the insertion portion 17B is optimized based on the material of the spacer pipe 17. In the case of the spacer pipe 17 formed of hard plastic, the thickness of the insertion portion 17B is dimensioned 0.1 mm thicker than the gap between the inner ring 8A and the shaft 9. In addition, the insertion portion 17B is tapered down toward its end. Thus, the insertion portion 17B can be smoothly inserted into the bearing 8 and can firmly hold the bearing 8 to the shaft 9. The thickness of the end of the tapered insertion portion 17B is dimensioned equal to or 0 to 0.3 mm larger than the gap between the inner ring 8A and the shaft 9. The thickness of the back of the tapered insertion portion 17B is dimensioned larger (e.g., 0.1 to 0.5 mm) than the gap between the inner ring 8A and the shaft 9. Thus, the tapered insertion portion 17B can be smoothly press-fitted into the bearing 8 and can firmly hold the bearing 8 to the shaft 9.

Also, in the caster 1 shown in Fig. 6, the total length of the insertion portions 17B of the pair of spacer pipes 17 inserted on the sides of the wheel 6 is shorter than the width of the inner ring 8A of the bearing 8 so that a gap 19 is created between the end surfaces of the opposed insertion portions 17 when the insertion portions 17B of the pair of spacer pipes 17 are inserted into the inner ring 8A. When press-fitted into the inner ring 8A of the bearing 8 on the both sides, the ends of the spacer pipes 17 do not come in contact with each other, that is, they do not interfere with insertion of them. Thus, the insertion portion 17B is surely inserted into the inner ring 8A, and can firmly hold the bearing 8. In particular, since the tapered insertion portions 17B is smoothly and deeply inserted into the inner ring 8A, and can firmly hold the inner ring 8A to the shaft 9. The insertion portions 17B of the pair of spacer pipes 17 of the illustrated caster 1 have the same length. The entire length of the insertion portion 17B is shorter than half of the width of the inner ring 8A. Thus, the gap 19 can be created between the opposed surfaces of the insertion portions 17B.

Alternatively, the center hole of the inner ring 8A of the bearing 8 may have a tapered surface the outer diameter of which increases toward the opening ends of the center hole on the both sides. In this case, the insertion portion 17B can be also smoothly press-fitted between the inner ring 8A and the shaft 9.

The difference between the outer diameters of the stopper portion 17A and the insertion portion 17B of the spacer pipe 17 shown in Fig. 6 is greater than the thickness of the inner ring 8A of the bearing 8. In the thus-configured spacer pipe 17, the inner ring 8A is fitted in a stepped part arranged between the stopper portion 17A and the insertion portion 17B so that the outer peripheral surface of the stopper portion 17A is located outward of the outer peripheral surface of the inner ring 8A. In this configuration, the width of a ring-shaped stepped part side surface 17C that is located on the boundary between the stopper portion 17A and the insertion portion 17B is larger than the thickness of the inner ring 8A. Accordingly, the both sides of the inner ring 8A can be firmly sandwiched by the ring-shaped stepped part side surfaces 17C so that the inner ring 8A can be secured in place. The outer peripheral surface of the stopper portion 17A is located in the opening part between the inner and outer rings 8A and 8B of the bearing 8. In other words, the stopper portion 17A partially covers the opening part between the inner and outer rings 8A and 8B. In particular, in the caster 1 shown in Fig. 6, the gap 18 between the stopper portion 17A and the peripheral wall 16 of the wheel portion 13 is designed narrow so that the peripheral wall 16 and the stopper portion 17A substantially entirely cover the opening part between the inner and outer rings 8A and 8B. Therefore, it is possible to reliably prevent foreign bodies such as debris from getting into the space between the inner and outer rings 8A and 8B.

Also, in the caster 1 shown in Fig. 6, the length (L) of the stopper portion 17A of the spacer pipe 17 is equal to the interval (D) between the inner ring 8A of the bearing 8 and the yoke 7. The stopper portion 17A of the spacer pipe 17 is sandwiched by the inner ring 8A of the bearing 8 and the yoke 7 to prevent axial deviation of the shaft 9. Thus, the spacer pipe 17 can hold the bearing 8 in place to prevent axial movement of the bearing 8 for the long term. In particular, in this configuration, in the case where the ends of the shaft 9 are coupled to the yoke 7 by caulking or in the case where, although not illustrated, a nut is screwed into a male-threaded part of the shaft on one side, in the process where the shaft 9 is fastened to the yoke 7 by hammering the shaft or in the process where the nut is screwed to fasten the shaft, the spacer pipes 17 are also sandwiched and reliably held by plates of the yoke 7. It should be appreciated that the length of the stopper portion 17A of the spacer pipe 17 may be shorter than the interval between the inner ring 8A and the yoke 7.

The yoke 7 is formed of metal or hard plastic, and includes a pair of opposed plates 20 that are located on the sides of the wheel 6. The ends of the shaft 9 are secured to the lower end parts of the opposed plates 20. A coupling opening 7A of a through opening is located in the upper part of the yoke 7. The horizontal bearing 11 is fitted in the coupling opening 7A. The coupling opening 7A accommodates and holds the horizontal bearing 11 that receives the vertical shaft 12 at the center of the horizontal bearing 11. Thus, the center of the circular recessed portion 7A agrees with the rotational axis m of the vertical shaft 9. The coupling opening 7A is arranged in the yoke 7 so that the rotational axis m of the vertical shaft 12 is deviated from the shaft 9 of the wheel 6. The coupling opening 7A is arranged in the yoke 7 so that the deviation distance (S) between the rotational axis m of the vertical axis 12 and the shaft 9 is 17.5 mm. However, the optimum value of the deviation distance (S) varies according to the size of the bag portion. The deviation distance (S) can be 10 to 25 mm, preferably 11 to 20 mm, and more preferably 12 to 18 mm. In the bag with small deviation distance (S), it is possible to prevent instability of the bag portion depending on the orientation of the casters. Contrary to this, if the deviation distance (S) is too small, casters cannot smoothly swivel when the bag portion is moved in the horizontal plane. For this reason, the deviation distance (S) is designed at an optimal value within the aforementioned range in consideration of the size of the wheel and the size of the bag portion.

The shaft 9 is held in the horizontal orientation to the lower end parts of the opposed plates 20 of the yoke 7. The wheel 6 is rotatably coupled to the shaft 9. The coupling opening 7A in the upper part of the yoke 7 accommodates and holds the horizontal bearing 11 so that the vertical shaft 12 is extends in the vertical direction. The fit-in groove 21 is arranged on the inner peripheral surface of the coupling opening 7A of the yoke 7 so that the outer ring 11B of the horizontal bearing 11 is fitted in the fit-in groove 21. The outer ring 11B of the horizontal bearing 11 is fitted in the fit-in groove 21 of the yoke 7 to hold the bearing 11. In the process where the yoke 7 is formed of plastic by molding, the outer ring 11B of the horizontal bearing 11 can be secured into the fit-in groove 21 by insert molding. In the case where the outer ring 11B of the horizontal bearing 11 is secured to the yoke 7 formed of plastic in the process where the yoke 7 is formed by molding, the outer ring 11B can be firmly secured to the fit-in groove 21. It should be appreciated that the outer ring of the horizontal bearing may be inserted into the fit-in groove of the coupling opening without a gap and secured to the yoke. Alternatively, the outer ring may be held to the fit-in groove of the coupling opening by an adhesive and secured to the yoke. In the case where the outer ring is fitted in the coupling opening, the inner diameter of the coupling portion is designed slightly smaller than the outer diameter of the outer ring. The outer ring is inserted into the smaller coupling opening when the coupling opening is elastically expanded. After the outer ring is inserted into the coupling opening, the coupling opening elastically contracts and presses the outer ring. Thus, the outer ring is secured not to drop off.

A stopper 22 is arranged on an opening part of the illustrated coupling opening 7A to prevent the outer ring 11B from dropping off. The stopper 22 protrudes inward from the opening part to prevent the outer ring 11B of the horizontal bearing 11 from dropping off. The stopper 22 can be expanded so that the outer ring 11B passed through this expanded space when the outer ring 11B is inserted into the coupling opening 7A. The stopper 22 is integrally formed with the illustrated yoke 7. It should be appreciated that the yoke may have a stopper ring (not shown) for the outer ring that is secured on the opening part of the coupling opening to prevent the outer ring from dropping off. The inner diameter of the stopper ring is designed smaller than the outer diameter of the outer ring and larger than the outer diameter of the inner ring. The stopper ring can be secured to the yoke by screws, an adhesive, a proper fit or the like.

The yoke 7 has a tubular upper end part. The upper end surface of the upper end part is horizontal plane. The outer peripheral surface of the upper end part is cylindrical. It should be appreciated that the upper end surface of the yoke may be a inclined surface that inclines from its center toward its outer periphery. Also, the outer peripheral surface of the upper end part may be tapered so that its outer diameter increases from the upper end toward the lower part.

The horizontal bearing 11 includes steel balls 11C or rollers between the inner ring 11A and the outer ring 11B. The horizontal bearing 11 including the steel balls 11C has an excellent axial load-carrying capacity. For this reason, this type of bearing is suitable. The horizontal bearing 11 has an outer diameter of 24 mm, and a width of 8 mm. The horizontal bearing 11 may have an outer diameter of 20 to 30 mm,. The outer ring 11B of the horizontal bearing 11 is coupled to the yoke 7, and the inner ring 11A is coupled to the vertical shaft 12. Thus, the yoke 7 can smoothly swivel about the vertical shaft 12.

The horizontal bearing 11 is a sealed bearing that includes sealing members 23. The sealing member 23 seals opening part between the inner ring 11A and the outer ring 11B. The seal materials 23 are secured to one of the inner ring 11A and the outer ring 11B, and slide on the other of the inner ring 11A and the outer ring 11B to prevent foreign bodies from getting into the space between the inner ring 11A and the outer ring 11B. The sealing member 23 is a sheet metal, a synthetic resin plate, or a rubber-type elastic member. The inner or outer periphery of the sealing member 23 is secured to the inner ring 11A or the outer ring 11B. In the case where the inner periphery of the sealing member 23 is secured to the outer periphery of the inner ring 11A, the outer periphery of the sealing member 23 is arranged in proximity to or in contact with the inner periphery of the outer ring 11B to slide on the inner periphery of the outer ring 11B. In the case where the outer periphery of the sealing member 23 is secured to the inner periphery of the outer ring 11B, the inner periphery of the sealing member 23 is arranged in proximity to or in contact with the outer periphery of the inner ring 11A to slide on the outer periphery of the inner ring 11A. In the case where the sealing member 23 is formed of a synthetic resin or a rubber-type elastic member, the sealing member 23 can be in contact with and slide on the outer periphery of the inner ring 11A or the inner periphery of the outer ring 11B. Accordingly, in this case, it is possible more reliably prevent foreign bodies such as debris from getting into the space between the inner and outer ring 11A and 11B.

The vertical shaft 12 is a metal rod. The lower end part of the vertical shaft 12 is coupled to the inner ring 11A of the horizontal bearing 11. The upper end part of the vertical shaft 12 is coupled in a vertical orientation to a holding section 10. The vertical shaft 12 is non-rotatably secured to the holding section 10. The illustrated vertical shaft 12 has a lower end part of a flange 24, and a caulked upper end part. Thus, the vertical shaft 12 is coupled to the yoke 7 through the inner ring 11A of the horizontal bearing 11. The lower end part of the vertical shaft may be caulked to be coupled to the yoke through the inner ring of the horizontal bearing. The thus-configured vertical shaft can be firmly coupled to the yoke through the inner ring of the horizontal bearing without play. Also, one end part of the vertical shaft may be provided with a flange, and an E-ring or the like may be snapped on the other end part of the vertical shaft so that the vertical shaft is coupled to the yoke through the inner ring of the horizontal bearing. In this case, the vertical shaft has a circumferential groove in an end part that accommodates the E-ring.

The holding section 10 is secured to the bottom surface of the bag portion 3 by screws. The holding section 10 may be formed integrally with a base plate 30 that is secured to the bottom surface of the bag portion 3 to be secured to the bag portion 3 through the base plate 30. The holding section 10 may be secured to the bottom surface of the base 4 that supports the bag portion 3. The holding section 10 has a through hole 10A at its center that allows the vertical shaft 12 to pass in the vertical direction. The vertical shaft 12 is inserted into the through hole 10A so that the vertical shaft 12 is secured in the vertical orientation.

The inner ring 11A of the horizontal bearing 11 is non-rotatably coupled to the holding section 10 through the vertical shaft 12. The illustrated holding section 10 includes a protruding part 10B around the through hole 10A that is in contact with the inner ring 11A. The spacer 26 is sandwiched between the protruding part 10B and the inner ring 11A. The spacer 26 is a metal plate or a hard plastic plate. Although the illustrated caster 1 includes the spacer 26 that is sandwiched between the protruding part 10B and the inner ring 11A, the protruding part may be in direct contact with the inner ring 11A without the spacer.

The holding section 10 has a lower surface 10C opposed to the upper end surface of the yoke 7. The illustrated holding section 10 has a skirt part 10D that covers the outer periphery of the upper part of the yoke 7. The cylindrical interior surface of the skirt part 10D is located in proximity to the cylindrical exterior surface of the yoke 7.

The illustrated caster 1 has a deformation preventing gap 25 between the holding section 10 and the yoke 7. The holding section 10 and the yoke 7 are located in proximity to each other. The deformation preventing gap 25 is a gap that is located away in the radial direction from the rotational axis m of the vertical shaft 12. The holding section 10 and the yoke 7 are located in proximity to and opposed to each other across the deformation preventing gap 25. The caster 1 has the deformation preventing gap 25 between the upper end surface of the yoke 7 and the lower surface 10C of the holding section 10. The deformation preventing gap 25 may be located between the outer peripheral surface of the cylindrical yoke 7 and the cylindrical interior surface of the skirt part 10D. Also, the deformation preventing gaps may be provided between the upper end surface of the yoke 7, the lower surface 10C of the holding section 10, and between the outer peripheral surface of the yoke 7 and the cylindrical interior surface of the skirt part 10D.

If a shock load is applied to the bag portion 3 and a bending shock force is applied to the vertical shaft 12, this force deforms the holding section 10, the vertical shaft 12, the yoke 7 and the like, or the relative position of the members changes that are coupled to create plays of the coupling part of the holding section 10, the vertical shaft 12, the yoke 7 and the like. When such deformation or change occurs, the holding section 10, the vertical shaft 12, the yoke 7 and the like will come in contact with each other. The deformation preventing gap 25 is a gap that allows this contact and designed 0.7 to 0.8 mm, for example. It should be appreciated that the deformation preventing gap 25 is optimized based on the materials of the holding part 10, the vertical shaft 12 and the yoke 7, and the plays between them. From this viewpoint, the deformation preventing gap 25 can be designed 0.1 to 1 mm. In the case where the deformation preventing gap 25 is too narrow, even a small load that is applied to the bag portion 3 may bring the yoke 7 and the holding section 10 into contact with each other in the deformation preventing gap 25. In this case, caster may not smoothly swivel. Contrary to this, in the case where the deformation preventing gap 25 is too large, only when a very large shock load is applied to the bag portion 3, the yoke 7 and the holding section 10 come in contact with each other. In this case, the effect of the deformation preventing gap 25 is small that receives the shock load. Accordingly, the horizontal bearing 11 may be likely to be susceptible to damage by the shock load. For this reason, ideally, the deformation preventing gap 25 is designed so that the yoke 7 comes in contact with the holding section 10 when 50% to 200% or more of the maximum vertical load is applied to on the horizontal bearing 11.

In the illustrated caster 1, the deformation preventing gap 25 can be adjusted to the optimum value by the spacer 26 that is sandwiched between the protruding part 10B of the holding part 10 and the inner ring 11A of the horizontal bearing 11. The reason is that the deformation preventing gap 25 can be adjusted by the thickness of the spacer 26. The deformation preventing gap can be large in the case where the inserted spacer is thick. The deformation preventing gap can be small in the case where the inserted spacer is thin. Also, the spacer can be a plastic or metal plate that is deformable so that the spacer will be deformed thin when a large shock load is applied to the bag portion. In the caster that uses this type of spacer, the deformation preventing gap will be narrow if a large shock load is applied. For this reason, if the shock load is applied, the holding section and the yoke come in contact with each other in the deformation preventing gap. Accordingly, it is possible to prevent that an excess load is applied to the horizontal bearing. Therefore, it is possible to more effectively prevent damage to he horizontal bearing by a large shock load.

In the caster 1 shown in Fig. 6, a shock load is applied to the bag portion 3, the holding section 10 and the yoke 7 come in direct contact with each other in the deformation preventing gap 25. Accordingly, the caster 1 prevents that an excess load is applied to the horizontal bearing 11. Also, the caster 1 includes a slip ring 27 (shown by a dashed line in Fig. 6) in the deformation preventing gap 25. The slip ring 27 has a disc shape, and is arranged between the upper end surface of the yoke 7 and the lower surface 10C of the holding section 10. The outer diameter of the slip ring 27 is substantially equal to the outer diameter of the upper end surface of the yoke 7 or the inner diameter of the lower surface 10C of the holding section 10. The inner diameter of the slip ring 27 is substantially equal to the inner diameter of the upper end surface of the cylindrical yoke 7. The slip ring 27 is a plastic sheet such as fluoroplastics and polyethylene resin that has a small slide resistance when in contact with the yoke 7 and the holding part 10. In the case where the bag portion 3 is in an upright orientation and a shock load is not applied to the bag portion 3, a pressure force between the yoke 7 and the holding section 10 is small, and a small frictional resistance of the slip ring 27 allows the yoke 7 to smoothly swivel. When a shock load is applied to the bag portion 3, the deformation preventing gap 25 becomes narrow. Accordingly, the slip ring will be pressed by the upper end surface of the yoke 7 and the lower surface 10C of the holding section 10. In this state, the slip ring 27 is sandwiched by the yoke 7 and the holding section 10 and in contact with the yoke 7 and the holding section 10. The slip ring 27 is pressed by the yoke 7 and the holding section 10, and supports a bending shock force. Since the thus-configured caster 1 uses the slip ring 27 as a shock absorbing member, the caster 1 receives a shock load applied to the bag portion 3 by means of the slip ring 27, and supports a bending shock force.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims. The present application is based on Application No. 2008-159798 filed in Japan on June 18, 2008.
- 1 ···: Caster
- 2 ···: Grip
- 3 ···: Bag portion
- 3A ···: Main section
- 3B ···: Cover section
- 4 ···: Base
- 5 ···: Telescopic rod
- 5A ···: Sliding rod
- 5B ···: Guide tube
- 6 ···: Wheel
- 7 ···: Yoke
- 7A ···: Coupling opening
- 8 ...: Bearing
- 8A ···: Inner ring
- 8B ···: Outer ring
- 9 ···: Shaft
- 10 ···: Holding section
- 10A ···: Through hole
- 10B ···: Protruding part
- 10C: ··· lower surface
- 10D ···: Skirt part
- 11 ···: Horizontal bearing
- 11A: ··· Inner ring
- 11B ··· Outer ring: 11C ··· Steel ball
- 12 ···: Vertical shaft
- 13 ···: Wheel portion
- 13A ···: Protruding section
- 14 ···: Tire portion
- 14A ···: Coupling groove
- 15 ···: Fit-in groove
- 16 ···: Peripheral wall
- 17 ···: Spacer pipe
- 17A ···: Stopper portion
- 17B: ··· Insertion portion
- 17C: ··· Stepped part side surface
- 18: ... Gap
- 19 ··· Gap: 20 ··· Plate
- 21 ···: Fit-in groove
- 22 ···: Stopper
- 23 ···: Sealing member
- 24 ···: Flange
- 25 ···: Deformation preventing gap
- 26 ···: Spacer
- 27 ···: Slip ring
- 30 ···: Base plate
- 91 ···: Caster
- 94 ···: Wheel cover
- 96 ···: Wheel
- 98: ··· Bearing
- 98A ···: Inner ring
- 98B ···: Outer ring
- 99 ···: Shaft
- 99a ···: Flange portion
- m ···: Rotational axis

## Claims

1. A bag on casters comprising:
a bag portion (3) with casters (1) arranged on the bottom thereof; and
a grip (2) that is coupled to the bag portion (3), wherein
the bag can be wheeled in an upright orientation on the casters (1) by using the grip (2), wherein each of said casters (1) further comprises
a wheel (6),
a shaft (9) that is coupled to the wheel (6) by one bearing (8), and
a yoke (7) that holds the ends of the shaft (9) and is coupled to the bag portion (3),
**characterized in that**
a fit-in groove (15) is arranged at the center of said wheel (6) to accommodate an outer ring (8B) of the bearing (8), and the outer ring (8B) of the bearing (8) is fitted in the fit-in groove (15) to hold the bearing (8), wherein the outer diameter (A) of said shaft (9) is smaller than the inner diameter (B) of the inner ring (8A) of the bearing (8), and a pair of spacer pipes (17) are inserted into the inner ring (8A) from the sides of the inner ring (8A) to be arranged on the shaft (9), wherein the spacer pipes (17) are a cylindrical member that is formed of a material with hardness lower than the shaft (9), and includes an insertion portion (17B) with a smaller outer diameter and a stopper portion (17A) with an outer diameter greater than the insertion portion (17B), wherein the insertion portions (17B) of the pair of spacer pipes (17) are inserted into the inner ring (8A) of the bearing (8) from the sides of the inner ring (8A) to hold the inner ring (8A) to the shaft (9), wherein the stopper portions (17A) are arranged between the inner ring (8A) and the yoke (7) to arrange the spacer pipes (17) at predetermined positions of the shaft (9), and the bearing (8) is held at a predetermined position of the shaft (9) by the spacer pipes (17).

2. The bag on casters according to claim 1, wherein said casters (1) are a swivel caster that is free to swivel on the horizontal plane.

3. The bag on casters according to claim 2, wherein each of said casters (1) is coupled to a vertical shaft (12) that is coupled to the bag portion (3) by coupling the yoke (7) to the bag portion (3) by a horizontal bearing (11).

4. The bag on casters according to any one of claims 1 to 3, wherein the insertion portion (17B) of each of said spacer pipes (17) is tapered down toward its end.

5. The bag on casters according to claim 4, wherein the thickness of the end of said tapered insertion portion (17B) is dimensioned 0 to 0.3 mm smaller than the space between the inner ring (8A) and the shaft (9).

6. The bag on casters according to claims 4 or 5, wherein the thickness of the back of said tapered insertion portion (17B) is dimensioned 0.1 to 0.5 mm greater than the space between the inner ring (8A) and the shaft (9) so that the insertion portion is press-fitted into said space.

7. The bag on casters according to any one of claims 1 to 6, wherein the thickness of said insertion portion (17B) is greater than the gap (18) between said shaft (9) and the inner ring (8A) so that the insertion portion (17B) is press-fitted into said space.

8. The bag on casters according to any one of claims 1 to 7, wherein the total length of the insertion portions (17B) of the pair of spacer pipes (17) inserted on the sides of said wheel (6) is shorter than the width of the inner ring (8A) of the bearing (8) so that a gap (19) is created on the inner side of the inner ring (8A) when the insertion portions (17B) of the pair of spacer pipes (17) are inserted into the inner ring (8A).

9. The bag on casters according to any one of claims 1 to 8, wherein the center hole of the inner ring (8A) of said bearing (8) has a tapered surface the outer diameter of which increases toward the opening ends of the center hole on the both sides.

10. The bag on casters according to any one of claims 1 to 9, wherein said shaft (9) is formed of steel or a steel alloy, and the spacer pipes (17) are formed of any of hard plastic, brass, lead and a lead alloy.

11. The bag on casters according to any one of claims 1 to 10, wherein the difference between the outer diameters of the stopper portion (17A) and the insertion portion (17B) of said spacer pipe (17) is greater than the thickness of the inner ring (8A) of said bearing (8).

12. The bag on casters according to any one of claims 1 to 11, wherein the depth of the fit-in groove (15) of said wheel (6) is deeper than the thickness of the outer ring (8B) of said bearing (8), and the difference between the outer diameters of the stopper portion (17A) and the insertion portion (17B) of said spacer pipe (17) is greater than the thickness of the inner ring (8A) of said bearing (8).

13. The bag on casters according to any one of claims 1 to 12, wherein said wheel (6) has peripheral walls (16) on the both sides of the fit-in groove (15), and the peripheral walls (16) are arranged in proximity to but not in contact with the outer peripheries of the stopper portions (17A) of said spacer pipes (17), wherein the gap (18) between the inner peripheral surface of the peripheral wall (16) and the outer peripheral surface of the stopper portion (17A) is 0.1 to 1 mm.

14. The bag on casters according to claim 13, wherein said spacer pipe (17) is formed of hard plastic, and the gap (18) between said peripheral wall (16) and the stopper portion (17A) is 0.5 to 0.7 mm.

15. The bag on casters according to any one of claims 1 to 14, wherein the outer ring (8B) of the bearing (8) is secured in the fit-in groove (15) of said wheel (6) by insert molding of the bearing (8) to a wheel portion (13) of the wheel (6) that is formed of plastic.
